# DEMANDE DE BREVET EUROPEEN

(11) **EP 0 824 898 A2**
(43) Date de publication de la demande: **25.02.1998**
(21) Numéro de dépôt: 96118879.4
(22) Date de dépôt: 26.11.1996
(51) Int. Cl.: A61C 13/30, A61C 13/00

(54) **Procédé pour la réalisation d'une reconstitution dentaire sur une racine dentaire naturelle, reconstitution dentaire et pièce d'armature**

(30) Priorité: 21.08.1996 CH 2054/96
(71) Demandeur: MAILLEFER INSTRUMENTS S.A., CH-1338 Ballaigues (CH)
(72) Inventeur: Aeby, François, 1442 Montagny-Pres-Yverdon (CH)
(74) Mandataire: Micheli & Cie

(57) **Abrégé**

La liaison entre le moignon (5a) de matière thermo-durcissable sur lequel se monte une couronne artificielle (7) s'effectue à l'aide d'une pièce d'armature (4) constituée d'un bobinage de fil engagé dans la partie (3a) du canal radiculaire (3) préparée à cet effet. La matière thermo-durcissable (5) remplit l'espace libre entre le canal dentaire (3a) et la pièce d'armature (4) et pénètre à l'intérieur de celle-ci du fait qu'elle est ajourée. Le démontage de l'ensemble en vue d'un retraitement de la racine dentaire (1) est aisé et peut s'effectuer sans risque d'occasionner des dégâts.

## Description

La présente invention a pour objet un procédé pour la réalisation d'une reconstitution dentaire sur une racine dentaire naturelle, la reconstitution dentaire obtenue par la mise en oeuvre de ce procédé et une pièce d'armature utilisée lors de cette mise en oeuvre.

La réalisation de reconstitutions dentaires sur une racine dentaire naturelle s'effectue, dans la plupart des cas, à l'aide d'un pivot que l'on fixe dans le canal radiculaire dentaire préalablement préparé à cet effet. Les pivots utilisés sont à fût conique ou cylindrique ou à fût combinant ces deux formes; ils sont dits actifs lorsqu'ils sont munis d'un filet de rétention se vissant dans la racine dentaire ou passifs lorsqu'ils se maintiennent dans la racine par friction, présentant à cet effet un état de surface rugueux.

Ces pivots sont le plus généralement scellés dans la racine dentaire a l'aide d'un ciment, notamment d'un ciment d'oxyphosphate de zinc. La fiabilité de tels scellements est bonne mais des défaillances ne peuvent être exclues a la suite des efforts que subit la dent au cours de la mastication. De telles défaillances peuvent nécessiter le démontage ou dépose du pivot. Une telle dépose peut également être nécessaire en cas de complication clinique ou en cas de défaillance de la dent artificielle, qu'elle soit réalisée en un matériau composite ou en céramique. La dépose du pivot est une opération délicate qui peut conduire à des dégâts irrémédiables.

Le but de la présente invention est de fournir une reconstitution dentaire qui permette des "reprises" aisées, c'est-à-dire qui permette d'effectuer un retraitement de la racine sans que le démontage de la reconstituion présente de difficultés particulières.

Ce but est atteint grâce aux moyens définis dans les revendications 1, 9 et 10.

Le dessin représente, à titre d'exemple, une forme d'exécution de l'objet de l'invention.
La fig. 1 est une coupe axiale d'une racine dentaire naturelle munie d'une reconstitution dentaire, et
La fig. 2 est une vue en élévation d'un détail, à échelle fortement agrandie.

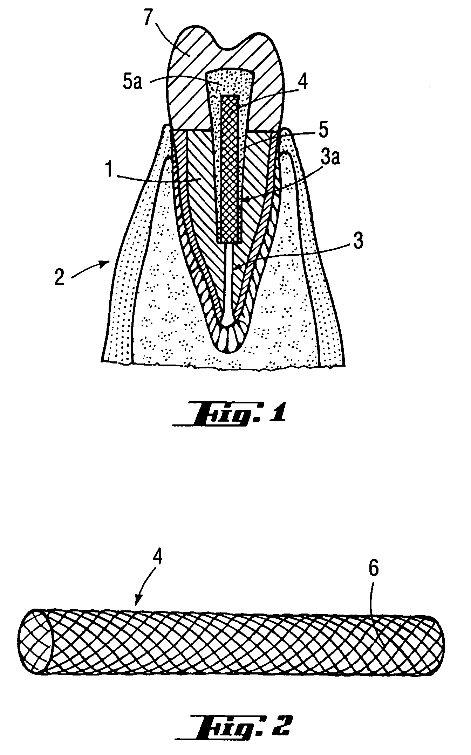

La racine dentaire naturelle, désignée par 1, représentée à la fig. 1, dans laquelle la gencive,désignée d'une façon générale par 2, a également été représentée, présente un canal radiculaire 3 dont la partie coronaire, désignée par 3a, a été préparée à l'aide d'outils rotatifs de coupe, tels que des forets actionnés manuellement ou mécaniquement.

Une pièce d'armature 4, en forme de cylindre ajouré, est engagée dans la partie 3a du canal radiculaire dans laquelle elle est scellée à l'aide d'une résine thermodurcissable, (polyméthyl méthacrylate, bis phénol diglycidyl méthacrylate), ou de composites ou compomères, tous ces matériaux pouvant être chargés de particules de verre, de quartz ou de silicate. Le matériau de scellement occupe un faible espace libre situé entre la pièce d'armature et la paroi de la partie 3a du canal radiculaire et pénètre à l'intérieur du cylindre 4 du fait que celui-ci est ajouré.

La pièce d'armature ajourée 4 est formée d'un fil 6 bobiné hélicoïdalement dans les deux sens de telle manière que ses brins s'entrecroisent. Le fil 6 pourra être en acier inoxydable (18/8). Cette pièce, dite "panier", pourra être renforcée à l'aide de deux ou trois fils longitudinaux qui seront soudés sur le fil bobiné 6 à l'aide d'un polyamide, de polyéthylène, de polypropylène ou de tout autre matière thermoplastique. Les brins du fil pourront également être soudés les uns aux autres à leurs points de croisement.

La pièce d'armature 4 débordant de la racine naturelle 1, la matière thermo-durcissable 5 forme, autour de la partie débordante de la pièce 4, une tête ou moignon 5a sur lequel se fixe une couronne artificielle 7, en céramique ou autre, ou tout autre élément de restauration directe.

La restauration pourra être réalisée par la tête ou moignon 5a lui-même qui sera façonné à cet effet.

En variante, la pièce d'armature 4 pourra être constituée par un treillis enroulé de façon à lui donner une forme cylindrique, dont les bords longitudinaux seront soudés l'un à l'autre pour que la forme cylindrique se maintienne.

On pourra également réaliser la pièce d'armature au moyen d'un tube dans lequel seront ménagées des ouvertures circulaires ou allongées.

Les matériaux utilisés pour la pièce d'armature pourront être de l'acier inoxydable, du titane, de la fibre de carbone ou de la fibre de verre.

Grâce à la présente disposition, les "reprises" sont beaucoup plus faciles : à l'aide d'un outil rotatif de coupe, la matière thermodurcissable située a l'intérieur de la pièce d'armature peut aisément être désagrégée et éliminée. La pièce d'armature perd alors de sa résistance et peut également être aisément retirée, ce qui donne accès a la partie apicale du canal radiculaire en vue d'un retraitement de la racine. Ce démontage de la reconstitution dentaire peut donc s'effectuer sans risque d'occasionner des dégâts a la racine naturelle.

## Revendications

1. Procédé pour la réalisation d'une reconstitution dentaire sur une racine dentaire naturelle, comprenant un tenon de fixation, caractérisé par le fait qu'on engage dans le canal radiculaire dentaire, préalablement préparé à cet effet, une pièce d'armature tubulaire ajourée qui dépasse ledit canal puis remplit celui-ci à l'aide d'un matériau durcissable dans lequel ladite pièce d'armature ajourée est noyée, enrobe dudit matériau la partie terminale de la pièce d'armature dépassant dudit canal, de manière à réaliser ainsi in situ le tenon de fixation de la dent artificielle, puis monte cette dernière autour de l'extrémité dudit tenon.

2. Procédé suivant la revendication 1, caractérisé par le fait que l'on réalise la pièce d'armature ajourée en bobinant un fil hélicoïdalement dans deux sens opposés de façon que les brins du fil bobiné s'entrecroisent.

3. Procédé suivant la revendication 2, caractérisé par le fait que l'on munit l'enroulement de fils entrecroisés de fils longitudinaux de raidissement que l'on soude au fil de l'enroulement.

4. Procédé suivant la revendication 1, caractérisé par le fait qu'on réalise ladite pièce d'armature ajourée en partant d'un tube dans lequel on ménage des ouvertures.

5. Procédé suivant la revendication 1, caractérisé par le fait qu'on réalise ladite pièce d'armature ajourée à l'aide d'un treillis que l'on enroule de façon à former un cylindre.

6. Procédé suivant la revendication 5, caractérisé par le fait qu'on soude l'un à l'autre les bords longitudinaux dudit treillis de façon que celui-ci se maintienne dans sa configuration cylindrique.

7. Procédé suivant la revendication 1, caractérisé par le fait qu'on utilise, pour solidariser la pièce d'armature ajourée à la racine dentaire, un matériau adhésif.

8. Procédé suivant la revendication 7, caractérisé par le fait que le matériau adhésif utilisé est une résine thermo-durcissable.

9. Reconstitution dentaire obtenue par la mise en oeuvre du procédé suivant la revendication 1, caractérisée par le fait qu'elle comprend une pièce d'armature tubulaire ajourée engagée dans le canal radiculaire naturel dans lequel elle est fixée à l'aide d'un matériau adhésif, cette pièce d'armature et ledit matériau formant ensemble le tenon de fixation.

10. Reconstitution dentaire suivant la revendication 9, caractérisée par le fait que ledit matériau adhésif enrobe la partie terminale de la pièce d'armature, laquelle dépasse du canal dentaire, la partie du matériau adhésif située à l'extérieur de la racine dentaire servant de moignon de fixation d'un élément de restauration.

11. Reconstitution dentaire suivant la revendication 10, caractérisée par le fait que le matériau adhésif utilisé est une résine thermo-durcissable.

12. Pièce d'armature assurant la liaison entre une racine dentaire naturelle et un élément de restauration utilisée lors de la mise en oeuvre du procédé suivant la revendication 1, caractérisée par le fait qu'elle est tubulaire et ajourée.
